# EUROPEAN PATENT SPECIFICATION

(11) **EP 2 693 924 B1**
(45) Date of publication and mention of the grant of the patent: **22.06.2016**
(21) Application number: 12713698.4
(22) Date of filing: 03.04.2012
(51) Int. Cl.: A47J 31/44

(54) **SET OF BEVERAGE PREPARATION MACHINES DIFFERING BY THEIR SIZES**
SATZ VON GETRÄNKEZUBEREITUNGSMASCHINEN MIT UNTERSCHIEDLICHEN GRÖSSEN
ENSEMBLE DE MACHINES DE PREPARATION DE BOISSONS À TAILLES DIFFÉRENTES

(30) Priority: 05.04.2011 EP 11161214
(43) Date of publication of application: 12.02.2014
(73) Proprietor: Nestec S.A., 1800 Vevey (CH)
(72) Inventor: REUST, Alexis, 1010 Lausanne (CH); BRUNNER, Yann, 1485 Nuvilly (CH)
(74) Representative: Ducreux, Marie
(86) International application number: PCT/EP2012/056092
(87) International publication number: WO 2012/136666

(56) References cited:
- EP-A1- 1 733 662
- EP-A2- 0 288 414
- DE-A1-102010 007 310
- GB-A- 2 408 191

## Description

### Field of the invention

The present invention relates to a set of differing beverage production machines, the machines differing by their sizes.

### Background of the invention

The manufacturing of beverage preparation machines offering different beverage delivery capacities is complex and costly. There is a need for rationalizing the manufacture of the beverage machines while still providing a large range of machines with different options for the operator.

US 5,957,033 describes a coffee machine that can be rapidly assembled. The machine is composed of several modules that are disposed such that they can be slid in a housing frame. These modules are a roasted and ground coffee powder extraction device, a water supply and an electronic control. The proposed process of manufacturing is simplified but only one type of machine is manufactured.

EP 2 070 454 describes the modular manufacturing of beverage production machines. All the machines present an identical core unit comprising a control circuitry and a beverage production module that is designed for housing a sealed capsule or a pod comprising a food ingredient and feeding a liquid to the interior of the capsule or pod. The machine also comprises a platform for mounting the core unit. The modularity consists in manufacturing different platforms on which different numbers of identical core units can be mounted. This process enables the production of a set of machines that differ by the number of units for processing the sealed capsule or the pod. In these machines each core unit mounted on the platform presents its own housing.

EP 0 288 414 describes a modularized beverage brewer with a base member that comes in different heights.

Other types of beverage dispensers comprise different modules with different functionalities (water supply, food ingredient storage, food ingredient dosing, food ingredient processing, ...) that are all placed and hired in a common housing our frame like e.g. vending machines. For this type of machines it would be an advantage to propose a range of beverage preparation machines proposing the preparation of several various different beverages (not only coffee but also tea, milk, chocolate and mixtures thereof), different formats of food ingredient packaging for feeding the machines, different qualities of beverage preparation and consequently presenting different level of costs depending of the requirement of the operator for his customers while simplifying the manufacturing of these different machines. It would then be possible to propose to the operators a large choice of differing beverage preparation machines adapted to each type of consumption (depending from e.g. the place where the machine is placed, the consumers who will use it) while optimizing manufacturing costs. In particular the operator would be able to choose between different sizes of machines able to store different numbers of food ingredients and consequently to deliver different numbers of beverages.

One aim of the present invention is to propose a solution for optimizing the manufacturing of a set of beverage production machines differing by their sizes.

### Summary of the invention

According to a first aspect, the invention concerns a set of differing beverage production machines presenting different sizes, the machines having housings comprising :
- one left, one right and one back side core housing panels,
- one bottom housing, said bottom housing being selected in a plurality of bottom housings differing by their width sizes,
- none or at least one back side extending housing panel for laterally extending the housing,
- none or at least a set of one left, one right and one back side extending housing panel for vertically extending the housing.

According to the invention the machines of the set preferably differ in their width sizes and/or their vertical sizes. This difference of sizes can have different origins. Generally the sizes of the machines are correlated to the quantity and/or the number of different food ingredients stored in the machines. Usually the difference of sizes is related to the size of the food ingredient storing module in the machine. The size of this module can depend on the number of different food ingredients stored in the machine. Actually some machines only store a soluble coffee ingredient and a soluble milk ingredient, whereas others store a soluble tea ingredient and/or a soluble cocoa ingredient too. In this last case the size of the machine has to be doubled. The size of the food ingredient storing module can also depend on the format of containers used to store the food ingredients in the machine that can present different volumes. The sizes of the machines can also be correlated to the beverage processing technology placed in the machine. Actually beverages can be prepared by means of very simple processing technologies like the delivery of at least one jet of diluent in a cup containing a soluble food ingredient or beverages can be prepared by means of more complex processing technologies like the whipping of a diluent and a soluble food ingredient in a whipping chamber in which an impeller rotates. This second technology takes a bigger place in the machine than a simpler nozzle producing diluent jet(s).

According to the invention all the machines of the set present common elements which are one left, one right and one back side core housing panels. Generally a set of one left, one right and one back side extending housing panel vertically extends the housing above the selected bottom housing.

According to a first mode the left, right and back side core panels can be separate panels. Each of the three panels is a substantially plane plate.

According to a second mode the back side core panel can be part of the left core panel and/or the right core panel. In this mode, the left and/or the right core panel presents an L-shape. When assembled these left and right side core panels determine the size of the smallest machine of the set of machines. Different variants can be implemented in which : one part - preferably the half - of the back side core panel is part of the left core panel and the other part of the back side core panel is part of the right core panel, or all part of the back side core panel is part of either the left core panel or the right core panel.

The machines of the set according to the invention can comprise none or at least one back side extending panel. The presence or not of at least one back side extending housing panel is correlated to the size of the machine. Preferably the back side extending panel is a substantially plane panel.

Usually the set of one left, one right and one back side extending housing panels for vertically extending the housing comprises three separate plane panels.

According to a specific embodiment the housings of the machines can comprise either a small back side core housing panel or a big back side core housing panel. This embodiment enables the production of higher number of different housings for the same set of machines.

Usually each of the core housing panels and the extending housing panel presents connection means for attaching them together. Preferably these means enable the attachment of the panels together in a simple and rapid manner. Preferably these connection means can be clipping or screwing means. Preferably the panels present openings for enabling the electric or fluid connections of the different devices housed in the machine like a pump, a heater, motors for rotors (dosing, mixing) ... These openings are preferably placed in the back side panel.

The bottom housings of the different machines of the set according to the invention differ by their width sizes. Their sizes are correlated to the sizes of the machines.

The machines can present have an external cover above the housing. As for the housing, the cover can consists in panels and in particular comprise :
- one left, one right and one back side core cover panels,
- none or at least one back side extending cover panel for laterally extending the cover,
- none or at least a set of one left, one right and one back side extending cover panels for vertically extending the cover.

The machines usually comprise a front door. As for the front door, it can comprise :
- one core front door,
- none or at least one front side extending cover panel.

Preferably the present invention applies to beverage production machines that produce beverages by interaction between a food ingredient and a diluent. The food ingredient can be a soluble food ingredient concentrate like a soluble powder or a liquid concentrate or it can be an infusable food ingredient like a roast and ground coffee powder or tea leaves. The diluent can either dissolve the soluble food ingredient concentrate or extract the infusable food ingredient. It is usually water.

In the housing, diluent supply means, food ingredient processing means, food ingredient dosing means and food ingredient storing means are usually positioned.

According to a second aspect, the invention concerns a process for manufacturing a beverage production machine from a set of differing beverage production machines such as described above comprising the steps of:
- pre-assembling bottom housings of different width sizes,
- configuring the machine by selecting a pre-assembled bottom housing,
- assembling the left, right and back side core housing panels and eventually at least one back side extending housing panel and/or one set of one left, one right and one back side extending housing panels for vertically extending the housing on the selected pre-assembled bottom housing necessary for the configured machine.

Preferably the pre-assembled bottom housing and the panels are assembled together by clipping or screwing.

Once the housings are assembled, the different functional modules of the beverage dispenser (like diluent supply, food ingredient storage, food ingredient dosing, food ingredient processing, ...) can be fixed inside the housings for continuing the machines manufacturing.

In the present application, the terms "left", "right", "back", are used to describe the relational positioning of the panels of the machines of the invention. These terms should be understood to refer to the machines in their normal sense of use as shown in the figures.

### Brief description of the drawings

The characteristics and advantages of the invention will be better understood in relation to the following drawings :
- Figures 1 and 2 illustrate a set of two differing beverage production machines housings according to the first mode of the present invention,
- Figure 3 illustrates a set of two differing beverage production machines housings according to the second mode of the present invention.
- Figure 4 illustrates a set of cover panels for differing beverage production machines according to the present invention.

### Detailed description of the drawings

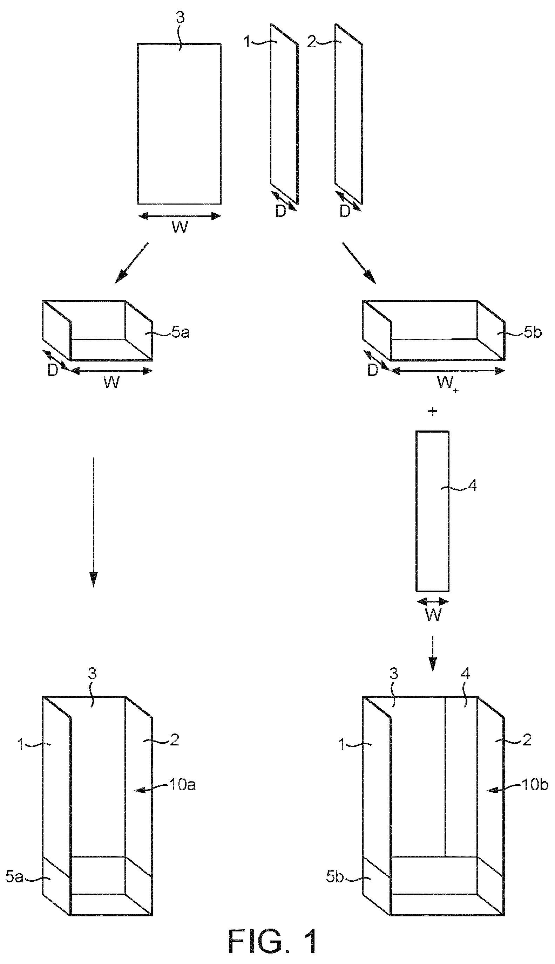

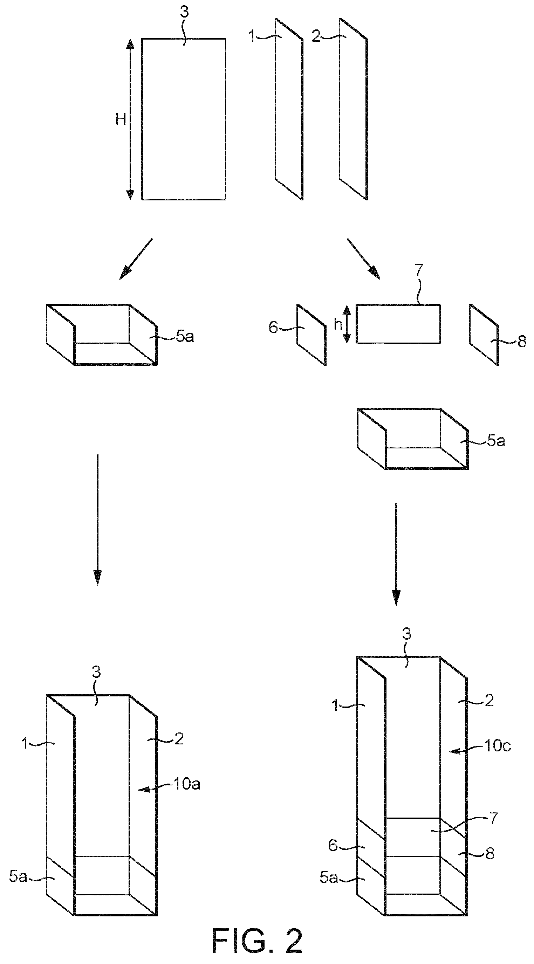

Figures 1 and 2 illustrate the way to build the housings 10a, 10b, 10c of three differing beverage production machines from the same set of machines. The housings are produced starting from the same common core elements that are the left, the right and the back side core housing panels.

According to the first mode of Figure 1, the left side core housing panel 1, the right side core housing panel 2 and the back side core housing panel 3 are three independent panels. These panels are essentially plane. Depending on the desired size of the dispenser, these three core panels can be connected either on a small bottom housing 5a or a large bottom housing 5b. These two bottom housings 5a, 5b differ by the size of their width, the small bottom housing 5a presenting a width W and the large bottom housing 5b presenting a width W⁺ bigger than W. The core housing panels 1, 2, 3 are configured so that the left and right side core panels present the same depth dimension D as the bottom housings 5a, 5b and the back side core panels present the same width dimension W as the smallest bottom housing 5a. Consequently the connection of the three core side housing panels 1, 2, 3 on the small bottom housing 5a produces a housing 10a. This housing is the smallest of the housings of the set of machines. For manufacturing the larger housing 10b, the three core side housing panels 1, 2, 3 and a complementary back side laterally extending housing panel 4 are connected on the large bottom housing 5b. The back side extending housing panel 4 presents a width w such that W+w equals W⁺. In the same manner larger housings can be produced by using larger bottom housings and additional laterally extending housing panels 4.

According to the first mode of Figure 2, the same machine housing 10a can be produced from the three panels 1, 2 and 3. This housing is the smallest of the housings of the set of machines. These three panels can also be used to produce a machine presenting a bigger height. For manufacturing the higher housing 10c, the three core side housing panels 1, 2, 3 and one left extending panel 6, one right extending panel 8 and one back side extending panel 7 for extending the housing vertically are connected on the bottom housing 5a. These extending panels 6, 7, 8 present the same height h. In the same manner larger housings can be produced by using larger bottom housings and additional laterally extending housing panels 4.

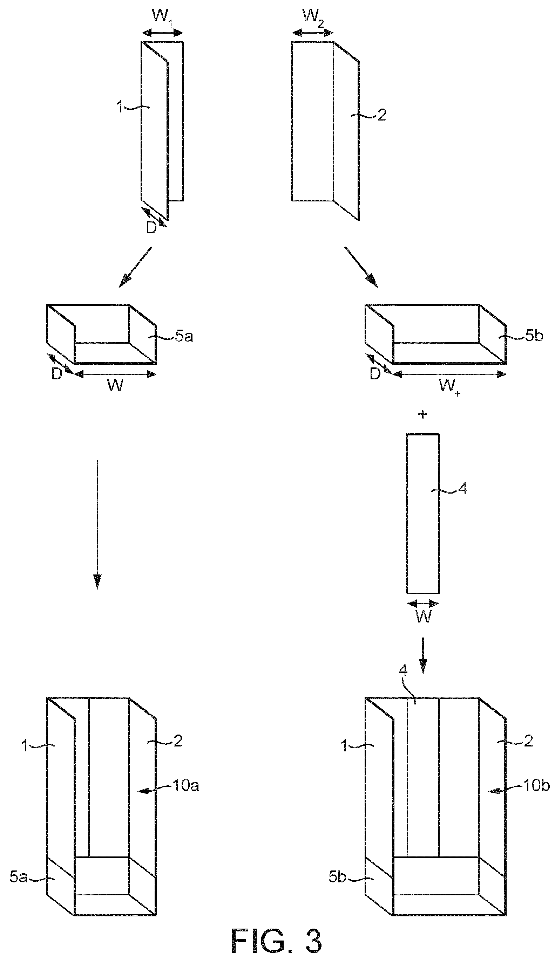

According to the second mode of Figure 3, the back side core panel is part of the left core panel 2 and of the right core panel 1. These two last panels present an L shape, one part of the L corresponding to a side panel and the other part to a half part of the back panel. Depending on the desired size of the dispenser, these two core panels can be connected either on a small bottom housing 5a or a large bottom housing 5b as in first mode. The core housing panels 1, 2 are configured so that the left and right side core panels present the same depth dimension D as the smallest bottom housing 5a and a width dimension w₁, w₂ such that w₁ + w₂ equals the width W of the smallest bottom housing 5a. Consequently the connection of the two core side housing panels 1, 2 on the small bottom housing 5a produces a housing 10a. This housing is the smallest of the housings of the set of machines. For manufacturing the larger housing 10b, the two core side housing panels 1, 2 and a complementary back side laterally extending housing panel 4 are connected on the large bottom housing 5b. The back side laterally extending housing panel 4 presents a width w such that W+w equals W⁺. In the same manner larger housings can be produced by using larger bottom housings and additional laterally extending housing panels 4. Taller housings can also be produced by using additional vertically extending housing panels 6, 7, 8.

Generally the left and right housing panels, either core or additional panels, of the set present means for attaching decorative cover panels thereon. Usually the back side core or extending housing panel presents holes to enable the electric connection of the electronic control unit with the other elements of the dispenser and the fluid connection of the boiler with the other elements of the machine.

Starting from the housings different food ingredient processing modules, food ingredient dosing module, food ingredient storing modules can be selected and placed in the housing to build a beverage preparation machine.

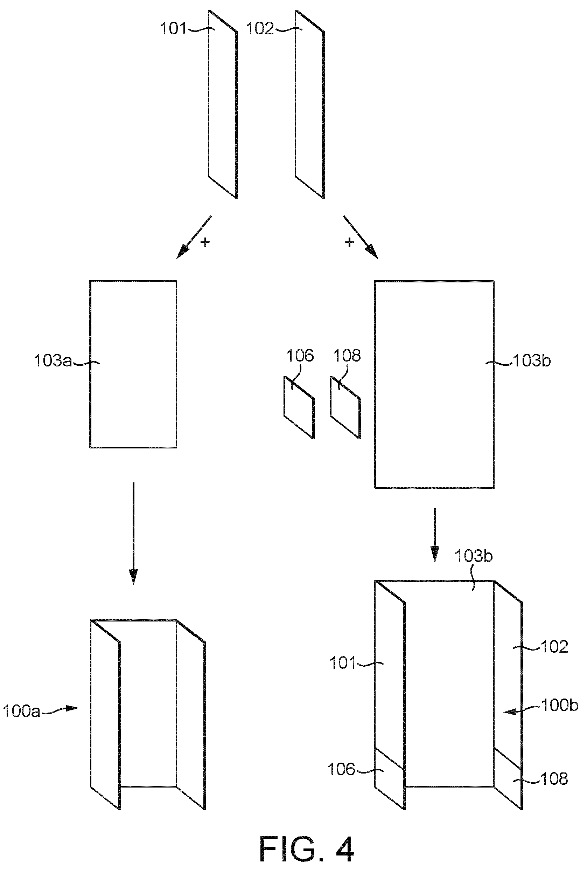

Generally covers are positioned on the beverage machine housings for aesthetic reasons. The covers can be conceived according to the same principle as the housings that is by assembling core cover panels optionally with additional laterally and/or vertically extending housing panels. Figure 4 illustrates how different cover panels can be used to cover either one small machine housing or one big machine housing. In the first case the small cover 100a is conceived from three basic panels 101, 102 and 103a. Usually these panels are not assembled together but each of them is attached on the corresponding right, left or back side of the machine. In the second case the big cover 103b is conceived from three basic panels 101, 102 and 103b and two additional vertically extending panels 106, 108. The use of several basic back side panels of different side can also be implemented for manufacturing different housings.

Generally a front cover is also placed in front of the housing and comprises means for making a beverage selection like a touch screen or buttons. The general principle developed for the housing can be applied to the front cover that can be built from a core front cover and optionally at least one extending front cover panel. In the same manner the top of the machine can be built from a core top cover and optionally at least one extending top cover panel.

The present invention presents the advantage of enabling the production of a very large set of machines that present different sizes without having to produce specific numerous pieces for manufacturing their housings. Only a limited optimized number of housing pieces can be produced for assembling all the different machines.

Another advantage of the present invention is that the costs for manufacturing the set of machines are reduced, particularly for machines produced in a plastic material. The presence of core elements enables the reduction of the number of moulds for producing the different elements of the housings.

## Claims

1. Set of differing beverage production machines (10a, 10b) presenting different sizes, the machines having housings comprising :
- one left, one right and one back side core housing panels (1, 2, 3),
- one bottom housing, said bottom housing being selected in a plurality of bottom housings (5a, 5b) differing by their sizes,
- none or at least one back side extending housing panel (4) for laterally extending the housing,
- none or at least a set of one left, one right and one back side extending housing panels (6, 7, 8) for vertically extending the housing,
**characterized in that** said bottom housings (5a, 5b) are differing by their width sizes.

2. Set of differing beverage production machines according to Claim 1 wherein the machines are susceptible to differ in their width sizes and their vertical sizes.

3. Set of differing beverage production machines according to Claim 1 or 2, wherein the sizes of the machines are correlated to the quantity and/or the number of different food ingredients stored in the machines and/or the beverage processing technology placed in the machine.

4. Set of differing beverage production machines according to any of the precedent claims, wherein the left, right and back side core panels (1, 2, 3) are separate plane panels.

5. Set of differing beverage production machines according to any of the claims 1 to 3, wherein the back side core panel for laterally extending the housing is part of the left and/or the right core panel (1, 2).

6. Set of differing beverage production machines according to any of the precedent claims, wherein the back side extending panel for laterally extending the housing (4) is a plane panel.

7. Set of differing beverage production machines according to any of the precedent claims, wherein the set of one left, one right and one back side extending housing panels (6, 7, 8) for vertically extending the housing comprise three separate plane panels.

8. Set of differing beverage production machines according to any of the precedent claims, wherein the housings of the machines comprise either a small back side core housing panel (103a) or a big back side core housing panel (103b).

9. Set of differing beverage production machines according to any of the precedent claims, wherein each of the core housing panels and the extending housing panel presents connection means for attaching them together.

10. Set of differing beverage production machines according to any of the precedent claims, wherein the machines have an external cover comprising :
- one left, one right and one back side core cover panels,
- none or at least one back side extending cover panel for laterally extending the cover,
- none or at least a set of one left, one right and one back side extending cover panels for vertically extending the cover.

11. Process for manufacturing a beverage production machine from a set of differing beverage production machines according to Claims 1 to 10 comprising the steps of:
- pre-assembling bottom housings of different width sizes,
- configuring the machine by selecting a pre-assembled bottom housing,
- assembling the left, right and back side core housing panels and eventually at least one back side extending housing panel and/or one set of one left, one right and one back side extending housing panels for vertically extending the housing on the selected pre-assembled bottom housing necessary for the configured machine.

12. Process according to Claim 11 wherein the pre-assembled bottom housing and the panels are assembled together by clipping and/or screwing.

## Patentansprüche

1. Satz unterschiedlicher Getränkeherstellungsmaschinen (10a, 10b) verschiedene Abmessungen aufweisend, wobei die Maschinen Gehäuse aufweisen, umfassend:
- eine linke, eine rechte und eine rückseitige Kerngehäuseplatte (1, 2, 3),
- ein Gehäuseunterteil, wobei das Gehäuseunterteil unter einer Vielzahl von Gehäuseunterteilen (5a, 5b) ausgewählt wird, die sich durch ihre Abmessungen unterscheiden,
- keine oder mindestens eine rückseitige Gehäuseerweiterungsplatte (4) zum seitlichen Erweitern des Gehäuses,
- keine oder mindestens ein Satz aus einer linken, einer rechten und einer rückseitigen Gehäuseerweiterungsplatte (6, 7, 8) zum vertikalen Erweitern des Gehäuses,
**dadurch gekennzeichnet, dass** die Gehäuseunterteile (5a, 5b) sich durch ihre Breitenabmessungen unterscheiden.

2. Satz unterschiedlicher Getränkeherstellungsmaschinen nach Anspruch 1, wobei die Maschinen sich durch ihre Breitenabmessungen und ihre vertikalen Abmessungen unterscheiden können.

3. Satz unterschiedlicher Getränkeherstellungsmaschinen nach Anspruch 1 oder 2, wobei die Abmessungen der Maschinen mit der Menge und/oder der Anzahl verschiedener, in den Maschinen aufbewahrter Nahrungsmittelzutaten und/oder der in der Maschine platzierten Getränkeverarbeitungstechnik korreliert sind.

4. Satz unterschiedlicher Getränkeherstellungsmaschinen nach einem der vorstehenden Ansprüche, wobei die linke, rechte und rückseitige Kernplatte (1, 2, 3) separate ebene Platten sind.

5. Satz unterschiedlicher Getränkeherstellungsmaschinen nach einem der Ansprüche 1 bis 3, wobei die rückseitige Kernplatte zum seitlichen Erweitern des Gehäuses Teil der linken und/oder der rechten Kernplatte (1, 2) ist.

6. Satz unterschiedlicher Getränkeherstellungsmaschinen nach einem der vorstehenden Ansprüche, wobei die rückseitige Erweiterungsplatte zum seitlichen Erweitern des Gehäuses (4) eine ebene Platte ist.

7. Satz unterschiedlicher Getränkeherstellungsmaschinen nach einem der vorstehenden Ansprüche, wobei der Satz aus einer linken, einer rechten und einer rückseitigen Gehäuseerweiterungsplatte (6, 7, 8) zum vertikalen Erweitern des Gehäuses drei separate ebene Platten umfasst.

8. Satz unterschiedlicher Getränkeherstellungsmaschinen nach einem der vorstehenden Ansprüche, wobei die Gehäuse der Maschinen entweder eine kleine rückseitige Kerngehäuseplatte (103a) oder eine große rückseitige Kerngehäuseplatte (103b) umfassen.

9. Satz unterschiedlicher Getränkeherstellungsmaschinen nach einem der vorstehenden Ansprüche, wobei jede der Kerngehäuseplatten und die Gehäuseerweiterungsplatte Verbindungsmittel aufweisen, um sie aneinander zu befestigen.

10. Satz unterschiedlicher Getränkeherstellungsmaschinen nach einem der vorstehenden Ansprüche, wobei die Maschinen eine äußere Abdeckung aufweisen, umfassend:
- eine linke, eine rechte und eine rückseitige Kernabdeckungsplatte,
- keine oder mindestens eine rückseitige Abdeckungserweiterungsplatte zum seitlichen Erweitern der Abdeckung,
- keine oder mindestens einen Satz aus einer linken, einer rechten und einer rückseitigen Abdeckungserweiterungsplatte zum vertikalen Erweitern der Abdeckung.

11. Verfahren zur Herstellung einer Getränkeherstellungsmaschine aus einem Satz unterschiedlicher Getränkeherstellungsmaschinen nach Anspruch 1 bis 10, das folgende Schritte umfasst:
- Vormontieren von Gehäuseunterteilen verschiedener Breitenabmessungen,
- Konfigurieren der Maschine durch Auswählen eines vormontierten Gehäuseunterteils,
- Montieren der linken, rechten und rückseitigen Kerngehäuseplatten und schließlich mindestens einer rückseitigen Gehäuseerweiterungsplatte und/oder eines Satzes aus einer linken, einer rechten und einer rückseitigen Gehäuseerweiterungsplatte zum vertikalen Erweitern des Gehäuses auf das ausgewählte vormontierte Gehäuseunterteil, das für die konfigurierte Maschine erforderlich ist.

12. Verfahren nach Anspruch 11, wobei das vormontierte Gehäuseunterteil und die Platten durch Festklemmen und/oder durch Verschrauben zusammengebaut werden.

## Revendications

1. Ensemble de différentes machines de production de boissons (10a, 10b) présentant différentes tailles, les machines comportant des boîtiers comprenant :
- un panneau de boîtier principal gauche, un panneau de boîtier principal droit et un panneau de boîtier principal arrière(1, 2, 3),
- un boîtier inférieur, ledit boîtier inférieur étant choisi dans une pluralité de boîtiers inférieurs (5a, 5b) qui diffèrent par leurs tailles,
- aucun ou au moins un panneau de boîtier d'extension arrière (4) pour étendre latéralement le boitier,
- aucun ou au moins un ensemble d'un panneau de boîtier d'extension gauche, un panneau de boîtier d'extension droit et un panneau de boîtier d'extension arrière (6, 7, 8) pour étendre verticalement le boîtier,
**caractérisé en ce que** lesdits boîtiers inférieurs (5a, 5b) diffèrent par leurs dimensions en largeur.

2. Ensemble de différentes machines de production de boissons selon la revendication 1, dans lequel les machines sont susceptibles de différer dans leurs dimensions en largeur et dans leurs dimensions verticales.

3. Ensemble de différentes machines de production de boissons selon la revendication 1 ou 2, dans lequel les tailles des machines sont corrélées à la quantité et/ou au nombre des différents ingrédients alimentaires stockés dans les machines et/ou à la technologie de traitement des boissons exploitée dans la machine.

4. Ensemble de différentes machines de production de boissons selon l'une quelconque des revendications précédentes, dans lequel les panneaux principaux gauche, droit et arrière (1, 2, 3) sont des panneaux plans séparés.

5. Ensemble de différentes machines de production de boissons selon l'une quelconque des revendications 1 à 3, dans lequel le panneau principal arrière permettant d'étendre latéralement le boîtier fait partie du panneau principal gauche et/ou du panneau principal droit (1, 2).

6. Ensemble de différentes machines de production de boissons selon l'une quelconque des revendications précédentes, dans lequel le panneau d'extension arrière destiné à étendre latéralement le boîtier (4) est un panneau plan.

7. Ensemble de différentes machines de production de boissons selon l'une quelconque des revendications précédentes, dans lequel l'ensemble d'un panneau de boîtier d'extension gauche, un panneau de boîtier d'extension droit et un panneau de boîtier d'extension arrière (6, 7, 8) pour étendre verticalement le boîtier comprend trois panneaux plans séparés.

8. Ensemble de différentes machines de production de boissons selon l'une quelconque des revendications précédentes, dans lequel les boîtiers des machines comprennent un petit panneau de boîtier principal arrière (103a) ou un grand panneau de boîtier principal arrière (103b).

9. Ensemble de différentes machines de production de boissons selon l'une quelconque des revendications précédentes, dans lequel chacun des panneaux de boîtier principal et le panneau de boîtier d'extension présente un moyen de connexion pour les attacher ensemble.

10. Ensemble de différentes machines de production de boissons selon l'une quelconque des revendications précédentes, dans lequel les machines présentent un couvercle externe comprenant :
- un panneau de couverture principal gauche, un panneau de couverture principal droit et un panneau de couverture principal arrière,
- aucun ou au moins un panneau de couverture d'extension arrière pour étendre latéralement le couvercle,
- aucun ou au moins un ensemble comprenant un panneau de couverture d'extension gauche, un panneau de couverture d'extension droit et un panneau de couverture d'extension arrière pour étendre verticalement le couvercle.

11. Procédé de fabrication d'une machine de production de boissons à partir d'un ensemble de différentes machines de production de boissons selon les revendications 1 à 10 comprenant les étapes consistant à :
- pré-assembler des boîtiers inférieurs de différentes dimensions en largeur,
- configurer la machine en sélectionnant un boîtier inférieur pré-assemblé,
- assembler les panneaux de boîtier principal gauche, droit et arrière et finalement au moins un panneau de boîtier d'extension arrière et/ou un ensemble d'un panneau de boîtier d'extension gauche, un panneau de boîtier d'extension droit et un panneau de boîtier d'extension arrière pour étendre verticalement le boîtier sur le boîtier inférieur pré-assemblé sélectionné nécessaire pour la machine configurée.

12. Procédé selon la revendication 11, dans lequel le boîtier inférieur pré-assemblé et les panneaux sont assemblés entre eux par encliquetage et/ou vissage.
